# EUROPEAN PATENT SPECIFICATION

(11) **EP 2 613 984 B1**
(45) Date of publication and mention of the grant of the patent: **22.07.2015**
(21) Application number: 11773830.2
(22) Date of filing: 08.09.2011
(51) Int. Cl.: B60T 1/10, F16D 57/00, B60W 10/24, B60W 10/26

(54) **ENERGY RECOVERING DEVICE FOR BREAKING SYSTEM OF VEHICLES**
ENERGIERÜCKGEWINNUNGSVORRICHTUNG FÜR EIN FAHRZEUGBREMSSYSTEM
DISPOSITIF DE RÉCUPÉRATION D'ÉNERGIE POUR SYSTÈME DE FREINAGE DE VÉHICULES

(30) Priority: 09.09.2010 IT PA20100032
(43) Date of publication of application: 17.07.2013
(73) Proprietor: Di Salvo, Giovan Battista, 91026 Mazara del Vallo (TP) (IT)
(72) Inventor: Di Salvo, Giovan Battista, 91026 Mazara del Vallo (TP) (IT)
(86) International application number: PCT/IB2011/002096
(87) International publication number: WO 2012/032400

(56) References cited:
- FR-A1- 2 891 592
- GB-A- 298 533
- GB-A- 453 526
- GB-A- 2 283 949
- GB-A- 2 346 193
- US-A- 4 744 577
- US-A1- 2007 207 889

## Description

### State of the Art

The breaking system named "regenerative" or with energy recovering are used in several types of land vehicles such as cars, bikes, motorbikes and generally on all the vehicles provided with wheels, for recovering at least part of the otherwise lost energy which is product during the braking.

Such systems have an energy storing device connected to the brake and designed to be actuated upon the braking to receive energy by the wheel of the vehicle. The stored energy can be re-used to aid the vehicle in its normal forward, particularly in a slope or when it needs an additional power.

The energy recovering devices could be divided into two macro-categories: a first one comprises the devices wherein the releasing of the stored energy is electronically controlled, such as the system commonly named *kers,* while a second type comprises the devices basically operating in a mechanical way. The first devices have the advantage of allowing the complete control of the time at which the stored energy is released to the vehicle motor. However, they are generally of complex construction and then are particularly expensive; therefore their use is limited to the vehicles with high performances.

The devices of the second category, one of which is disclosed for example in FR2891592, even if are more simple and economical to be product, and therefore designed to be implemented on every kind of vehicles, such as the common bikes with lever or disk braking system, they don't allow the control of the releasing of the energy. By contrast, these devices are designed for releasing the energy stored during the braking to the propelling system of the vehicle soon the brake is released.

A further energy recovering device is also disclosed in GB453526, wherein a spring is loaded during braking and, upon the deactivation of the brake, releases the stored elastic energy to a crown wheel connected to a vehicle wheel. This system also provides for the vehicle's user the possibility of releasing the stored energy in a controlled way by means of a sprocket wheel system, without specifying the embodiment of such a system. However this device has great overall dimensions and is adapted for vehicles having drum braking system and not disk braking system or simple jaw braking system, such as bikes or motorbikes.

### Presentation of the invention

A general object of the present invention is to overcome the above drawbacks realizing an energy recovering device for braking systems which is particularly effective and economic.

A main object is realizing an energy recovering device for braking systems that allows the control of the time of releasing of the energy stored during braking in a simple and immediate manner.

Another object is realizing an energy recovering device for braking systems that allows taring the maximum energy that can be stored during braking.

A particular object is realizing an energy recovering device for braking systems couplable to a disk or jaw braking system to be inserted in a vehicle such as a bike or motorbike.

These objects, and other which will result clearer hereinafter, are fulfilled by an energy recovering device for braking systems of vehicles, particularly land vehicles, according claim 1.

This device will allow transferring the energy stored in the elastic element only when it needs and without complex solutions of the electronic type, for installing the device also on series vehicles or on relatively economic vehicles such as the bikes.

Moreover, the device will be extremely compact and may be directly connected on a side to the braking system of the vehicle and on the other side to the propelling means of the same with great efficiency, to be also installed on bikes, motorbikes and the like.

### Breif disclosure of the drawings

Further features and advantages of the invention will appear more evident in light of a detailed description of preferred but not exclusive embodiments of the device according to the invention, shown as a non limiting example with the aid of the annexed drawing tables, wherein:
the Figure 1 is a schematic cross view of a first embodiment of an energy recovering device inserted in the braking system of a motor vehicle, i.e. a car;
the Figure 2 is a cross view of a second embodiment of a device applicable to the braking system of a bike or the like;
the Figure 3 is a cross view of a third embodiment of a device applicable to the braking system of a bike or the like.

### Detailed description of a preferred embodiment

The energy recovering device of the invention may be applied to the braking system of a land vehicle having at least one wheel connected to propelling wheel, indifferently with respect of the type of the braking system, which may be of the disk, jaw, lever type or the like, and of the propelling means, which may comprise an endothermic or electric engine connected to the wheel by a axle shaft, such as in the cars, or the bottom bracket with a pinion and chain transmission as in a bike.

Essentially, the device 1 will comprise a support body 2 anchorable to a fixed part of the vehicle by means of a suitable bracket 3 and housing inside a spring member 4 for storing energy susceptible to move form a first working condition wherein it is unloaded to a second working condition wherein it is at least partially loaded. Opportunely the elastic member is of the torsion type. An interface member 5 is also provided integral with the elastic storing member 4 and associable to the brake B of the vehicle. The interface member 5 will be susceptible to rotate about a first longitudinal axis X to transmit a torque to the storing member 4 and allow the transferring thereto of at least part of the energy developed during braking, promoting its passage from the first to the second working condition.

A transmission member 6 will be integral with the storing member 4 and connectable to the propelling means of the vehicle, not shown, to transmit to these latter the stored energy of the elastic member 4.

Advantageously, the device 1 will comprise unidirectional releasing means 7 of the elastic member 4 designed to selectively avoid the elastic element 4 to turn from the second loaded condition to the first unloaded condition.

Moreover, the releasing means 7 will be at least partially disabled in a selective manner to allow the at least partial transferring of the stored energy of the elastic member 4 to the transmission member 6.

Advantageously, the storing elastic member 4 will be a substantially longitudinal coil spring with coils having predetermined maximum section. The spring 4 may have a first longitudinal end coil 8 made integral with the interface member 5 and a second end coil 9 integral with the transmission member 6.

Particularly, the support body 2 may comprise a substantially longitudinal tubular portion 10 rotatable about the first longitudinal axis X and housing the elastic member 4, coaxial to the same tubular portion 10.

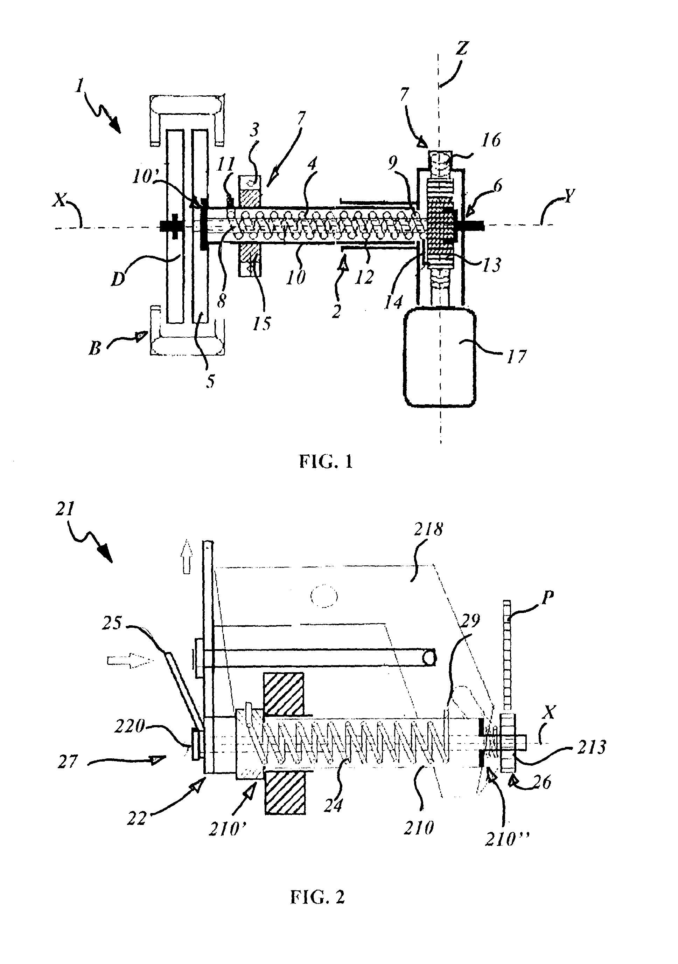

In the embodiment of figure 1, this latter may have a first end 10' made integral with the interface member 5, e.g. by means of reciprocal keying, and may be firmly fastened to the first end coil 8 of the elastic member 4, e.g. by a catch 11.

Moreover, the support body 2 may comprise a longitudinal inner cylindrical jacket 12 that passes through at least part of the coils of the elastic member 4, preferably the whole elastic member 4, to limit its torque. In practice, the torque of the spring 4 will be limited by the abutment against the inner cylindrical jacket 12.

With particular reference to figure 1, the interface member 5 may be made by a fiction disk susceptible to come into contact by relative translation with the brake disk D of the braking system B.

The releasing means 7 will comprise a kinematic motion adapted to mechanically connect the transmission member 6 to the second end 9 of the coil spring 4.

In particular, the kinematic motion may comprise a first gear member 13 rigidly fastened on a side the transmission member 6 and on the other side to the second end coil 9 of the elastic member 4, e.g. by a rigid anchoring ring 14 integral to the elastic member 4 and that engages the external toothing of the first gear member 13.

This latter will be rotatable around a second axis Y, preferably coinciding with the first X to simplify the configuration of the device 1, and will be connected to the propelling means of the vehicle. For example, it may be directly mounted on the axle shaft of the vehicle.

The releasing means 7 will also comprise a disk 15 rotatable around the first axis X exclusively in a first direction opposite to that of the interface member 5 during the turning form the second to the first working condition of the elastic member 4.

By this way the unidirectional disk 15 will avoid that, when the brake disk D is released, the interface member 5 may rotate in opposite direction with respect to the motion, unloading the elastic member 4.

The kinematic motion of the selective releasing means 7 will further comprise a second gear member 16 adapted to engage the first gear member 13. Particularly, the second gear member 16 will be unidirectionally rotatable and configured to avoid the rotation of the first gear member 13 when the elastic member 4 turns from the first to the second working condition.

In practice, during the braking step, the second gear member 16 will be rotationally locked, allowing the torque of the elastic member 4 and the following loading.

In a preferred embodiment the first gear member 13 will be a toothed wheel, e.g. with a double crown, while the second gear member 16 will be a worm screw rotatable only in the forwarding direction of the vehicle and extending along an axis Z orthogonal to the second axis Y.

Advantageously, the releasing means 7 will comprise an electric actuator 17 selectively actuatable by a user of the vehicle and adapted to unlock the second gear member 16 to allow the rotation of the first gear member 15 around the second axis Y with such a direction to bring the elastic member 4 form the second to the first working condition.

By this way, the elastic member 4 may unload to transfer at least part of its stored energy to the propelling means of the vehicle.

The actuator 17 may be an electric engine housed in a proper carter of the support body 2.

In figure 2 is shown a device 10 applicable to the braking system of a vehicle such as a bike provided with a cable for operating the brake and at least one wheel moved by a pinion or toothed gear motion, not shown in the figure.

The device 21 will also comprise a support body 22 with a longitudinal tubular portion 210 that houses, integral with the same, an elastic member 24 for energy storing, that will be preferably a coil spring or other torque elastic member.

The interface member 25 will be instead a lever anchorable to an operating cable that could be in turn connected to the operating cable of the braking system, or that could coincide with the same, e.g. by a through hole 217 wherein inserting and locking the cable.

The support body 22 will comprise a bracket 218 rigidly anchorable to a fixed part of the frame of the vehicle. In particular, the bracket 218 may be configured to be anchored at an anchoring bracket to the bike stand. Moreover, the tubular portion 210 will be rotatable around its longitudinal axis X and rotationally fastened to the lever 25 in a disengageable manner. Moreover, the tubular portion 210 may present the two longitudinal end 210' and 210" slidable in respective curved eyelet made in transverse portion of the anchoring bracket 218 for the movable fastening of this with the tubular portion 210.

By this way, the tubular portion 210, actuated by the lever 25, may turn from a first inoperative position wherein the brake is not actuated, wherein it is distal with respect of the vehicle wheel, to a second operative position with the brake actuated wherein it is into contact with the wheel for transmitting a torque and load the elastic member 24.

The kinematic motion of the releasing means 27 may comprise or be constituted by the transmission member 26 that may be a first externally toothed crown integral and coaxial with the tubular portion 210 and susceptible of engaging the pinion or toothed wheel motion of the vehicle only when the tubular portion 210 is in the first inoperative position.

The selective releasing means 27 finally comprise a pin 220 hand actuatable by the user of the vehicle and configured to selectively connect/disconnect the transmission member 26 from the tubular portion 210 of the support body 22 to activate/exclude the device 20.

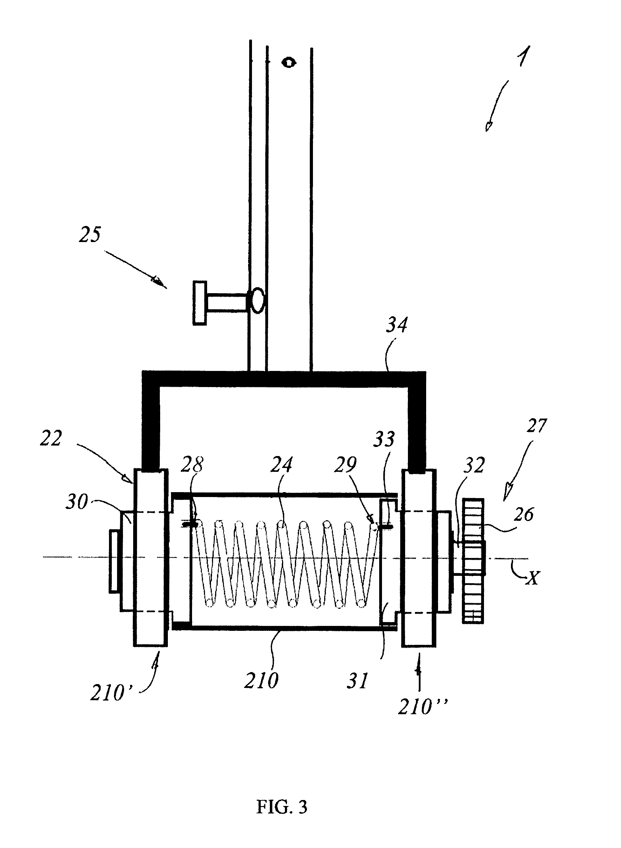

In a particular variant, shown in figure 3, the interface member 25 will comprise a substantially longitudinal loading crown 30 coaxial with the tubular portion 210 of the cylindrical support body 22, which will be keyed at a first end 210' to such a loading crown 30 for rotating integrally with the same upon the actuation of the brake.

The first end coil 28 of the spring 24 will be firmly fastened to the loading crown to be twisted during braking.

The transmission member 26 will be configured to engage the motion of the vehicle and rotate idle around the longitudinal axis X, dragged by the motion, when this latter rotates in the normal driving direction.

In particular, the transmission member 26 will be a first crown externally toothed integral and coaxial to the tubular portion 210 of the support body 22 and susceptible to engage the vehicle motion to be dragged in to rotation by the same in a first direction during the normal driving of the vehicle.

The kinematic motion of the selective releasing means 27 will comprise a second internally toothed crown 31 coaxial with the transmission member 26 and fastened to the second end 29 of the spring 24.

Moreover, the second toothed crown 31 will be at least partially inserted with play in the tubular portion 210 of the support body 22, in such a manner that it is not brought into rotation by the same.

The kinematic motion of the releasing means 27 will also comprise a longitudinal pin 32 that connects the first crown 26 to the second crown 31 and that will be apt to transmit the rotation movement from the first 26 to the second 31 exclusively when the first crown 26 rotates in a second rotation direction opposite to the first.

The releasing means 27 will comprise a hook 33 that connects the second end 29 of the spring 24 to the second crown 31 and that will be configured to avoid the spring 24 to turn from the loaded position to the unloaded one.

In particular, when the first crown 26 will be rotate in the second rotation direction, e.g. after a thrust on a pedal by the user in opposite sense to the driving direction, it will engage, through the pin 32, the second crown 31. Such movement will cause the unlocking of the hook 33, allowing the unloading of the spring 24 that will transmit the torque to the transmission member 26 through the kinematic motion and so to the central motion, allowing an aided restarting of the vehicle.

The contact between the tubular portion 220 and the vehicle wheel, generally the rear one, is obtained by acting on the lever actuated by the brake control. The lever fulcrum will be positioned on a bracket 34 adapted to be fixed to the vehicle frame, e.g. at the bifurcation of the fork of the rear wheel, close to the stand.

## Claims

1. An energy recovering device for braking system of vehicles, wherein a vehicle comprises at least one wheel connected to propelling means of the vehicle and associated to a brake (B), the device comprising:
- a support body (2, 22) anchorable to a fixed part of the vehicle, said support body being elongated along a longitudinal axis (X);
- an energy storing elastic member (4, 24) housed into said support body (2, 22) and susceptible of turning from a first working position wherein it is unloaded to a second working position wherein it is at least partially loaded with a torque;
- an interface member (5, 25) integral with said energy storing elastic member (4, 24) and associable to the vehicle brake (B), said interface member (5, 25) being susceptible of rotating around a first longitudinal axis (X) for transmitting a torque to said storing member (4, 24) and allowing the transmission thereto of at least part of the energy produced during braking, promoting its turning from said first to said second working position;
- a transmission member (6, 26) integral with said energy storing member (4, 24) and connectable to the propelling means of the vehicle for transmitting to this latter the energy stored by said elastic member (4, 24);
- unidirectional releasing means (7, 27) of said elastic member (4, 24) designed for selectively avoiding the turning of said elastic member (4, 24) from said loaded second working position to said unloaded first position, said releasing means (7, 27) being at least partially disengageable in a selective manner by a vehicle user to allow the at least partial transmission of the stored energy from said elastic member (4, 24) to said transmission member (6, 26) as the brake is released;
**characterized in that** said storing elastic member (4, 24) is a substantially longitudinal helical spring having a first longitudinal end (8, 28) integral with said interface member (5, 25) and a second end (9, 29) integral whit said transmission member (6, 26), said unidirectional releasing means (7, 27) comprising a kinematic motion adapted to mechanically connect said transmission element (6, 26) to said second end (9, 29) of said spring (4, 24).

2. Device according claim 1, **characterized in that** said support body (2, 22) comprises a substantially longitudinal tubular portion (10, 210) rotatable about said first longitudinal axis (X) and housing said elastic member (4, 24), said tubular portion (10, 210) having a first end (10', 210') integral with said interface member (5, 25) to be brought into rotation by the same upon the brake actuation.

3. Device according claim 2, **characterized in that** said spring (4, 24) is firmly connected at said first longitudinal end (8, 28) to said support body close to said first end (10', 210') of this latter to receive the torque from said interface member (5, 25).

4. Device according claim 2 or 3, **characterized in that** said support body (2, 22) comprises an inner longitudinal cylindrical jacket (12) that passes through at least part of the coils of said spring (4, 24) for limiting its elastic torsion.

5. Device according one or more of the preceding claims, **characterized in that** said releasing means (7) comprise a disk (15) externally keyed on said support body (2) and rotatable about said first axis (X) only in a first direction opposite to that of the interface member (5) during the turning from the second to the first working position of said spring (4).

6. Device according one or more of the preceding claim, **characterized in that** said kinematic motion comprises a first gear member (13, 213) rigidly fastened to said second end (9, 29) of said spring (4, 24) and rotatable about a second axis (Y), said first gear member (13, 213) being rigidly fastened on a side to the transmission member (6, 26) to be connected to the propelling means of the vehicle and on the other side to said second end (9, 29) of said spring (4, 24) to turn this latter from said first to said second working position.

7. Device according claim 6, **characterized in that** said kinematic motion of said releasing means (7) comprises a second gear member (16) adapted to engage said first gear member (13), said second gear member (16) being unidirectionally rotatable and designed for avoiding the rotation of said first gear member (13) as said elastic member (4) turns from said first to said second working position.

8. Device according claim 7, **characterized in that** said releasing means (7) comprise an electric actuator (17) selectively actuatable and adapted for unlocking said second gear member (16) for allowing its rotation about said second axis (Y) whit such a direction to promote the turning of said elastic member (4) from said second to said first working position.

9. Device according one or more of the claim 1 to 6, wherein the device is connectable to the braking system of a bike or motorbike having a cable for actuating the brake and at least one wheel moved by a pinion or sprocket movement, **characterized in that** said interface member (25) comprises a lever connected at one to said support body (22) and provided at the other end of an actuating cable connectable to or coinciding with the actuating cable of the braking system of the vehicle.

10. Device according claim 9, **characterized in that** said support body (22) comprises a bracket (218, 34) rigidly anchorable to a fixed part of the vehicle and a substantially longitudinal tubular portion (210) rotatable about said longitudinal axis (X) and housing said elastic member (24), solidal therewith.

11. Device according claim 10, **characterized in that** said tubular portion (210) of said support body (22) is fastened into rotation whit said lever (25) in a disengageable manner and fastened to said bracket (218) in a slidable manner for turning from a first inoperative position whit the brake not working, wherein said tubular portion (210) is distal whit respect of the vehicle wheel, to a second working position whit the brake working and wherein said tubular portion (210) is in contact whit the wheel for transmitting a torque and loading said elastic member (24).

12. Device according claim 11, **characterized in that** said transmission member (26) is an externally toothed crown integral and coaxial whit said tubular portion (210) and susceptible of engaging the vehicle movement to be brought into rotation by the same in a first rotation direction during the normal driving of the vehicle.

13. Device according claim 11, **characterized in that** said kinematic motion of said releasing means (27) comprises a second internally toothed crown (31) coaxial with said transmission member (26) and fastened to said second end (29) of said spring (24), said first crown (26) being at least partially inserted with play in said tubular portion (210) of said support body (22).

14. Device according claim 11, **characterized in that** said kinematic motion of said releasing means (27) comprises a longitudinal pin (32) that connects said first crown (26) to said second crown (31) and is adapted to transmit the rotation from the first to the second crown exclusively when said first crown (26) rotates in a second rotation direction opposite to the first.

15. Device according one or more of the claims 9 to 11, **characterized in that** said selective releasing means (27) comprise a pin (220) manually actuatable and designed for selectively connecting/disconnecting said transmission member (26) with respect of said tubular portion (210) of said support body (22).

## Patentansprüche

1. Eine energierückgewinnungsvorrichtung für bremssystem von fahrzeugen, wobei ein Fahrzeug wenigstens ein rad zum antreiben der gestreckten Fahrzeug und zu einer zugehörigen bremse (B), die Vorrichtung umfasst:
- einen stützkörper (2, 22) verankerbar an einem festen Teil des Fahrzeugs, wobei trägerkörper entlang einer Längsachse (X) gestreckt;
- eine energiespeicher elastisches Element (4, 24) untergebracht ist, in Tragkörper (2, 22) und anfällig drehen aus einer ersten Arbeitsposition, in der es in eine zweite arbeitsstellung, in der sie zumindest teilweise mit einem drehmoment belastet entladen;
- ein Schnittstellenelement (5,25) integral mit dem elastischen energiespeicher Element (4, 24) und verbindbar mit dem Fahrzeugbremse (B), wobei die schnittstell Element (5.25) empfänglich um eine erste längsdreh Achse (X) zur Übertragung eines Drehmoments zu dem Speicherelement (4, 24) und die Übertragung von dazu bei örtlichen teil der erzeugten energie beim bremsen förderung seiner wende aus der ersten in die zweite arbeit Position;
- ein Übertragungselement (6, 26) integral mit dem energiespeicherelement (4,24) verbunden ist und mit der antriebseinrichtung des fahrzeugs zu übertragen, um diesem letzteren das durch gespeicherte Energie, daß elastische Element(4, 24);
- unidirektional freigabeeinrichtung (7, 27) des elastischen Elements (4, 24) zum wahlweisen vermeiden der drehung aufgelegt, daß das elastische Element (4, 24) von der geladenen zweiten arbeitsstellung in die unbelasteten ersten position das freigabemittel (7,27) zumindest teilweise zu lösen in der lage in einer selektiven art und weise durch einen fahrzeugbenutzer, um die zumindest eine teilweise Übertragung der gespeicherten Energie von dem elastischen Element (4, 24) zu dem Übertragungsglied (6, 26) als brems ermöglichen ist freigegeben;
Dass die speicherung von elastischen Elements (4,24) gekennzeichnet ist eine im wesentlichen Längsschraubenfeder mit einem ersten Längsende (8, 28) integral mit dem schnittstellenelement (5,25) und ein zweites Ende (9, 29) integral Jota das Übertragungselement (6, 26), wobei die einrichtungsfreigabeeinrichtung (7, 27) umfassend einen kinematischen mechanismus angepasst, um mechanisch mit dem Übertragungselement (6, 26) zu dem zweiten ende (9, 29) der Feder (4, 24).

2. Vorrichtung nach Anspruch 1, **dadurch gekennzeichnet, daß** die Stützkörper (2, 22) eine im wesentlichen längliche, rohrförmige Abschnitt (10, 210), die drehbar um erste längsachse (X) und das Gehäuse das elastische Element (4,24), wobei rohrförmigen abschnitt (10, 210) mit einem ersten Ende (10', 210') integral mit dem schnittstellenelement (5, 25) in drehung durch das gleiche von der bremsbetätigung gebracht werden.

3. Vorrichtung nach Anspruch 2, **dadurch gekennzeichnet, daß** die feder (4, 24) gekennzeichnet ist, fest an der mit dem ersten Längsende (8, 28) an dem tragkörper dosis zum ersten ende (10; 210) der letzteren, um empfangen das drehmoment von der schnittstellenelement (5, 25).

4. Vorrichtung nach anspruch 2 oder 3, **dadurch gekennzeichnet, daß** die stützkörper (2, 22) einen inneren Längs zylindrischen Mantel (12), die durch 15 zumindest einen Teil der wicklungen verläuft die Feder (4, 24) zum begrenzen ihrer elastischen torsion.

5. Vorrichtung nach einem oder mehreren der vorhergehenden Ansprüche, **dadurch gekennzeichnet, dass** die freigabeeinrichtung (7) eine Scheibe (15) außen an verkeilt genannten stützkörper (2) und drehbar um die erste achse (X) nur in einer ersten richtung entgegengesetzt zu der der Schnittstellenelement (5) während des drehens von der zweiten in die erste arbeitsstellung der Feder (4).

6. Vorrichtung nach einem oder mehreren der vorhergehenden Ansprüche, dass die kinematische Bewegung aufweist ein erstes zahnradelement (13, 213) starr befestigten zweiten Ende (0.9, 29) der Feder (4, 24) und drehbar um eine zweite achse (Y), wobei das erste zahnradelement (13,213) starr an einer seite mit dem Übertragungsglied (6, 26) an die antriebseinrichtung des fahrzeugs verbunden werden befestigt und oli die andere Seite zu der zweiten Ende (9, 29) der Feder (4, 24) dieses letzteren zu drehen aus der ersten in die zweite aArbeitsposition.

7. Vorrichtung nach Anspruch 6, **dadurch gekennzeichnet, daß** die Kinematik des genannten Freigabemittel (7) ein zweites zahnradelement (16) für den eingriff umfasst das erste zahnradelement (13), wobei das zweite Zahnradelement (16) unidirektional drehbar ist und zur Vermeidung der drehung des genannten ersten entworfe zahnradelement (13) als das elastische Element (4) dreht sich von der ersten in die zweiten arbeitsposition.

8. Vorrichtung nach anspruch 7, **dadurch gekennzeichnet, dass** die freigabeeinrichtung (7) einen elektrischen aktuator (17) selektiv betätigbar und zum entriegeln angepasst genannte zweite Getriebeelement (16) zum ermöglichen seiner drehung um die zweite achse (Y) solche Richtung, um das drehen des elastischen Elementes (4) von der zweiten zur förderung der ersten arbeitsposition.

9. Vorrichtung nach einem oder mehreren der ansprüche I bis 6, wobei die vorrichtung verbindbar mit der Bremsanlage eines Fahrrad oder ein Motorrad mit einem Kabel zur Betätigung der Bremse und bei ein Rad von einem ritzel oder ritzelbewegung, daß das schnittstellenelement bewegt, **dadurch gekennzeichnet** (25) einen Hebel umfasst, an einer mit dem Stützkörper verbunden ist (22) und an dem anderen ende eines betätigungskabels verbindbar oder zeitgleich mit dem betätigungskabel der bremsanlage des Fahrzeugs vorgesehen.

10. Vorrichtung nach anspruch 9, **dadurch gekennzeichnet, daß** die stützkörper (22) einen bügel (218, 34), die fest verankerbar an einem festen Teil des Fahrzeugs und eine im wesentlichen längliche, rohrförmige teil (210) drehbar um die längsachse (X) und aufnehmen des elastischen Elements (24), solidal diesem.

11. Vorrichtung nach anspruch 10, **dadurch gekennzeichnet, daß** der rohrförmige abschnitt (210) des stützkörpers (22) in drehung Jota genannten befestigten hebel (25) in eine lösbare Art und befestigt, um die Halterung (218) in einer verschiebbaren art und weise für das drehen von einer ersten Ruhestellung Whit die bremse nichtarbeitet, wobei der rohrförmige abschnitt (210) distal bezüglich der fahrzeugrades, in eine zweite arbeitsposition brems arbeiten und wobei der rohrförmige abschnitt (10 2) in kontakt das rad Übertragen eines drehmoments und laden des genannten elastischen Elements (24).

12. Vorrichtung nach anspruch 11, **dadurch gekennzeichnet, dass** das Übertragungselement (26) gekennzeichnet ist, ein außenverzahntes kranz integral und koaxial jota rohrförmigen abschnitts (2 10) und anfällig des eingriffs des fahrzeugbewegung in rotation von demselben in einem ersten bringbar drehrichtung während des normalen Fahrens des Fahrzeugs.

13. Vorrichtung nach Anspruch 11, dass die kinematische bewegung der freigabeeinrichtung (27) aufweist einen zweiten innenverzahnten zahnkranz (31) koaxial zu dem Übertragungselement (2.6) und befestigt das zweite Ende (29) der Feder (24) die erste kranz (26) zumindest teilweise mit Spiel in den rohrförmigen abschnitt (2,10) des eingesetzten stützkörpers (22).

14. Vorrichtung nach anspruch 11. **dadurch gekennzeichnet, dass** die kinematische bewegung der freigabe-Einrichtung (27) dadurch einen Längsstift (32), die die erste kranz (26) mit dem zweiten kranz (31) verbindet und geeignet ist, um die drehung von der sende umfasst der ersten in die zweite kranz ausschließlich, wenn die erste kranz (26) sich in einer zweiten drehrichtung entgegengesetzt zur ersten.

15. Vorrichtung nach einem oder mehreren der ansprüche 9 bis 11, **dadurch gekennzeichnet, dass** die selektiven Freigabemittel (27) einen Stift (220) manuell betätigbare umfassen und zum selektiven verbinden ausgelegt / trennen des Ubertragungselements (26) bezüglich des rohrförmigen Abschnitts (210) der stützkörper (22).

## Revendications

1. Un dispositif de récupération d'énergie pour le système de freinage des véhicules, dans lequel une véhicule comprend au moins une roue reliée à des moyens de propulsion de la véhicule et associé à un frein (B), le dispositif comprenant:
- un corps de support (2, 22) ancrée à une partie fixe du véhicule, ledit corps de support étant allongée le long d'un axe longitudinal (X);
- une accumulation d'énergie de l'élément élastique (4, 24) logé dans ledit corps de support (2, 22) et susceptible de tourner depuis une première position de travail dans laquelle il est déchargé à une seconde position de travail dans laquelle il est au moins partiellement chargée avec un couple ;
- un élément d'interface (5, 25) solidaire de ladite accumulation d'énergie élastique élément (4, 24) et pouvant être associé au frein de véhicule (B), ladite interface élément (5, 25) étant susceptible de tourner autour d'un premier longitudinal axe (X) pour transmettre un couple audit élément (4, 24) stockant et permettant la transmission, en même temps, d'une partie de l'énergie produite lors d'un freinage, en favorisant sa rotation à partir de ladite première à ladite deuxième travail poste;
- un élément de transmission (6, 26) faisant corps avec ledit élément d'accumulation d'énergie (4, 24) et pouvant être relié à des moyens de propulsion du véhicule pour transmettre à cette dernière l'énergie stockée par ledit élément élastique (4, 24);
- moyens de libération de énergie unidirectionnelles (7, 27) dudit élément élastique (4, 24) conçu pour éviter de manière sélective la rotation dudit élément élastique (4, 24) à partir de ladite seconde position de travail chargé vers ladite première position non chargée, ledit moyen de libération (7, 27) étant au moins partiellement dégager capable d'une manière sélective par un utilisateur du véhicule pour permettre à la au moins partiellement la transmission de l'énergie stockée à partir dudit élément élastique (4, 24) sur ledit élément de transmission (6, 26) lorsque vous relâches le frein ;
**Caractérisé en ce que** ledit élément élastique de stockage (4, 24) est un ressort hélicoïdal ayant une première extrémité longitudinale (8, 28) solidaire avec ledit élément d'interface (5, 25) et une seconde extrémité (9, 29) solidaire et intégrale dudit élément de transmission (6, 26), ledit moyen de libération unidirectionnelles (7, 27) comprenant un mouvement cinématique adaptée pour connecter mécaniquement ledit élément de transmission (6, 26) à ladite seconde extrémité (9, 29) dudit ressort (4, 24).

2. Dispositif de la revendication selon 1, **caractérisé en ce que** ledit corps de support (2, 22) comprend une partie tubulaire sensiblement longitudinal (10, 210) pouvant tourner autour dudit premier axe longitudinal (X) et logeant ledit élément élastique (4, 24), ledit partie tubulaire (10, 210) ayant une première extrémité (10 ;102) solidaire avec ledit élément d'interface (5, 25) pour être mis en rotation par le même lors de l'actionnement de frein.

3. Dispositif de la revendication selon 2, **caractérisé en ce que** ledit ressort (4, 24) est relié rigidement à ladite première extrémité longitudinale (8, 28) à ladite dose de corps de support à ladite première extrémité (10', 210') de ce dernier à recevoir le couple provenant dudit élément d'interface (5, 25).

4. Dispositif selon la revendication 2 ou 3, **caractérisé en ce que** ledit corps de support (2, 22) comprend une enveloppe intérieure cylindrique longitudinal (12) qui passe à travers 15 une partie au moins des spires dudit ressort (4, 24) pour limiter la torsion élastique.

5. Dispositif selon une ou plusieurs des revendications précédentes, **caractérisé en ce que** lesdits moyens de libération (7) comprennent un disque (15) claveté sur l'extérieur dudit corps de support (2) et pouvant tourner autour dudit premier axe (X) uniquement dans une première direction opposée à celle de l'organe d'interface (5) pendant la rotation de la seconde à la première position de travail dudit ressort (4).

6. Dispositif selon une ou plusieurs des revendications précédentes, **caractérisé en ce que** ledit mouvement cinématique comprend un premier élément d'engrenage (13, 213) fixé rigidement a ladite seconde extrémité (0,9, 29) dudit ressort (4, 24) et pouvant tourner autour d'un second axe (Y), ledit premier élément d'engrenage (13, 213) étant fixé rigidement sur un côté de l'élément de transmission (6, 26) devant être connectée aux moyens de propulsion du véhicule et de l'autre côté de ladite seconde extrémité (9, 29) dudit ressort (4, 24) pour mettre ce dernier à partir de ladite première à ladite seconde position de travail.

7. Dispositif selon la revendication 6, **caractérisé en ce que** ledit mouvement cinématique dudit moyen de libération (7) comprend un second élément d'engrenage (16) adaptée pour engager ledit premier élément d'engrenage (13), ledit second élément d'engrenage (16) étant unidirectionnel rotatif et conçu pour éviter la rotation de ladite première élément d'engrenage (13) lorsque ledit élément élastique (4) se transforme à partir de ladite première à ladite deuxième position de travail.

8. Dispositif selon la revendication 7, **caractérisé en ce que** lesdits moyens de libération (7) comprennent un actionneur électrique (17) sélectivement actionnable et adapté pour déverrouiller ledit second élément d'engrenage (16) pour permettre sa rotation autour dudit second axe (Y) une direction telle à favoriser la rotation dudit élément élastique (4) de ladite seconde à ladite position de travail en premier.

9. Dispositif selon une ou plusieurs des revendications 1 à 6, dans lequel le dispositif est pouvant être connecté au système de freinage d'un vélo ou une moto comportant un câble d'actionnement du frein et à! est une roue mue par un pignon ou roue dentée mouvement, **caractérisé en ce que** ledit élément d'interface (25) comprend un levier relié à une sur ledit corps de support (22) et prévu à l'autre extrémité d'un câble d'actionnement pouvant être relié à ou coïncidant avec le câble d'actionnement du système de freinage du véhicule.

10. Dispositif de la revendication selon 9, **caractérisé en ce que** ledit corps de support (22) comprend un support (218, 34) rigidement ancré à une partie fixe du véhicule et une partie tubulaire sensiblement longitudinal (210) pouvant tourner autour dudit axe longitudinal (X) et logeant ledit élément élastique (24),

11. Dispositif selon la revendication 10, **caractérisé en ce que** ladite partie tubulaire (210) dudit corps de support (22) est lié en rotation a ledit levier (25) de façon à embraies / débrayer avec un mouvement de translation et fixé à ladite console (218) passer d'une position de repos, avec frein pas applique, dans lequel ladite partie tubulaire (210) est espace de la roue de véhicule, à une deuxième position de travail avec le frein applique dans lequel ladite partie tubulaire (210) est en contact avec la roue pour la transmission d'un couple et le chargement dudit élément élastique (24).

12. Dispositif de la revendication selon 11, **caractérisé en ce que** ledit élément de transmission (26) est une couronne à denture extérieure brin solidaire et coaxiale de ladite partie tubulaire (2 10) et susceptible d'engager le mouvement du véhicule pour être mis en rotation par la même dans une première direction de rotation au cours de la conduite normale du véhicule.

13. Dispositif de la revendication selon 11, **caractérisé en ce que** ledit mouvement cinématique desdits moyens de libération (27) comprend une seconde couronne à denture intérieure (31) coaxial avec ledit élément de transmission (2,6) et fixé à ladite seconde extrémité (29) dudit ressort ( 24),, ladite première couronne (26) étant au moins partiellement insérée avec jeu dans ladite partie tubulaire (2 10) dudit corps de support (22).

14. Dispositif selon la revendication 11, **caractérisé en ce que** ledit mouvement cinématique desdits moyens de libération (27) comprend un axe longitudinal (32) qui relie ladite première couronne (26) à ladite deuxième couronne (31) et est adapté pour transmettre la rotation à partir de la première à la seconde couronne exclusivement lorsque ladite première couronne (26) tourne dans une seconde direction de rotation opposée à la première.

15. Dispositif selon une ou plusieurs des revendications 9 à 11, **caractérisé en ce que** lesdits moyens de libération sélective (27) comprennent une broche (220) pouvant être actionné manuellement et conçu pour connecter de manière sélective / déconnecter ledit élément de transmission (26) par rapport à ladite partie tubulaire (210) dudit corps de support (22).
